Europäisches Patentamt

European Patent Office

Office européen des brevets

(19)

(11) Numéro de publication : **0 414 588 B1**

# FASCICULE DE BREVET EUROPEEN

(12)

(45) Date de publication du fascicule du brevet :
**19.11.92 Bulletin 92/47**

(51) Int. Cl.⁵ : **G01P 15/10**

(21) Numéro de dépôt : **90402229.0**

(22) Date de dépôt : **03.08.90**

(54) **Capteur accélérométrique à poutres vibrant en flexion.**

(30) Priorité : **08.08.89 FR 8910662**

(43) Date de publication de la demande :
**27.02.91 Bulletin 91/09**

(45) Mention de la délivrance du brevet :
**19.11.92 Bulletin 92/47**

(84) Etats contractants désignés :
**BE DE ES GB GR IT SE**

(56) Documents cités :
**EP-A- 0 331 557
WO-A-89/03998
DE-B- 1 243 895
US-A- 4 479 385
SENSORS AND ACTUATORS, vol. 17, nos. 3,4,
mai 1989, pages 513-519, Lausanne, CH; F.R.
BLOM et al.: "Resonating silicon beamforce
sensor"**

(73) Titulaire : **OFFICE NATIONAL D'ETUDES ET
DE RECHERCHES
AEROSPATIALES(O.N.E.R.A.)
Etablissement Public de l'Etat 29 avenue de la
Divison Leclerc
F-92320 Châtillon (FR)**

(72) Inventeur : **Janiaud, Denis, 2 Avenue du Berry
- Bt E3
Résidence les Millepertuis
F-91940 Les Ulis (FR)**
Inventeur : **Muller, Serge
8 Impasse de la Remarde
F-92290 Ollainville (FR)**

(74) Mandataire : **Cabinet Martinet & Lapoux
BP 405
F-78055 Saint Quentin en Yvelines Cédex (FR)**

## Description

La présente invention concerne un capteur accélérométrique pouvant être embarqué par exemple en tant qu'accéléromètre dans des missiles ou des satellites pour le guidage de ceux-ci, ou en tant qu'inclinomètre dans une plateforme de forage off shore.

Plus particulièrement, le capteur travaille en flexion et comprend une partie massive fixe, une partie massive mobile et deux poutres ou deux lames vibrantes ayant chacune des extrémités solidaires des parties massives respectivement. Un tel capteur met à profit la grande sensibilité de la fréquence d'une poutre vibrant en flexion, à des forces de compression ou d'extension qui s'exercent longitudinalement à la poutre lorsque la partie massive mobile est soumise à une accélération transversale. Le signal sortant du capteur est fonction d'une fréquence différentielle des deux poutres qui est facilement exploitable pour en déduire la valeur de l'accélération, ou de l'inclinaison d'un plan par rapport au champ de gravité terrestre.

Un tel capteur dit cantilever à double résonateur est décrit dans le brevet américain US-A-4479385. Les parties massives sont constituées par des pavés massifs dont l'un est fixé à une embase. Les poutres sont des plaques rectangulaires en quartz supportant des électrodes appropriées et complètement distinctes et séparables des pavés massifs. Ces poutres forment des entretoises entre les pavés massifs. Chaque poutre a ses extrémités plates fixées à des faces coplanaires des pavés respectivement.

Le capteur connu selon le brevet US-A-4 479 385 offre principalement trois inconvénients.

Un premier inconvénient de ce capteur connu consiste en une faible sensibilité à l'accélération, typiquement 100 à 300 Hz de variation maximale de fréquence pour des poutres de résonateur ayant une fréquence propre de 40 kHz. La variation relative maximale de fréquence est donc de l'ordre de $\Delta f/f = 200/40000 = 0,5$ %.

Cet inconvénient est dû au fait que la partie mobile est seulement tenue à la partie fixe par deux poutres dont la raideur en flexion est peu élevée. La masse de la partie mobile doit de ce fait être limitée à une faible valeur pour que la fréquence propre du capteur soit supérieure à 2000 Hz selon les recommandations pour les accéléromètres. En outre, les poutres peuvent travailler en torsion en raison d'une raideur relativement faible.

Un autre inconvénient du capteur connu, dû également à la faible valeur de la masse mobile, est relatif à la nécessité d'un découplage vibratoire des poutres vibrantes pour que celles-ci vibrent indépendamment l'une de l'autre. Chacune des poutres consiste de préférence en un résonateur de type double diapason.

Un troisième inconvénient du capteur connu concerne l'assemblage des divers éléments entre eux, pavés massifs et poutres vibrantes ou poutres de transducteur. Cet assemblage intervient de façon importante dans le prix de revient du capteur d'une part, et par ses qualités, dans les performances du capteur.

La présente invention vise à fournir un capteur accélérométrique remédiant à des inconvénients de la technique antérieure, et plus particulièrement, ayant une masse de partie mobile plus élevée afin d'améliorer la sensibilité du capteur.

A cette fin, un capteur accélérométrique du type défini dans l'entrée en matière est caractérisé en ce qu'il comprend deux secondes poutres ayant chacune des extrémités solidaires des parties massives et disposées de part et d'autre des poutres vibrantes. La raideur en flexion des secondes poutres est plus élevée que celle des poutres vibrantes. Dans ces conditions, la partie mobile peut avoir une masse élevée, de l'ordre de 1000 fois la masse d'une poutre simple vibrante et procure une bonne isolation mécanique entre les vibrations des poutres. En pratique, la variation relative de fréquence des poutres vibrantes est de l'ordre 5 % pour une accélération de 100 G, le capteur présentant une fréquence propre de 5000 Hz. Cette variation relative de fréquence est donc dix fois supérieure à celle du capteur selon le brevet US-A-4479385.

Un autre objectif de l'invention est d'éviter tout assemblage de pièces dissociables.

A cette fin, les parties massives, les poutres vibrantes et les secondes poutres constituent un corps monobloc usiné dans une même plaque de matériau d'épaisseur uniforme.

Il est à noter que la EP-A-14957 divulgue un corps monobloc d'accéléromètre qui comprend une ou deux poutres flexibles et qui est obtenu par gravure dans un substrat. Toutefois, cet accéléromètre est du type à condensateur variable constitué par deux électrodes en regard fixées sur la partie fixe et une poutre vibrante ou la partie mobile, respectivement.

Le caractère monobloc permet d'usiner chimiquement le corps du capteur dans une plaque de matériau solide élastique, par exemple en matériau piézoélectrique tel que du quartz, et donc de réduire la durée de fabrication et le coût du capteur, mais également les dimensions du capteur.

Le caractère monobloc du corps du capteur confère également une excellente définition de la géométrie des différentes parties du capteur, contribuant encore à réduire le coût et améliorer les performances du capteur. De préférence, les parties massives ont dans leur épaisseur un plan médian commun de part et d'autre duquel s'étendent lesdites poutres vibrantes. Ces poutres vibrantes ont des axes longitudinaux parallèles situés dans un plan oblique au plan médian des parties massives.

D'autres avantages et caractéristiques de l'invention apparaitront plus clairement à la lecture de la description suivante de plusieurs réalisations préférées de l'invention en référence aux dessins annexés correspondantes dans lesquels :

- la Fig. 1 est une vue en perspective du corps d'un capteur selon l'invention, et montre schématiquement des moyens de mesure de fréquence associés au capteur;

- la Fig. 2 est une vue de côté longitudinal du corps de capteur de la Fig. 1 ;

- la Fig. 3 est une vue en coupe suivant le plan III-III de la Fig. 1 ;

- la Fig. 4 est une vue en perspective d'un autre corps de capteur selon l'invention ; et

- la Fig. 5 est une vue de face du corps de capteur de la Fig. 4.

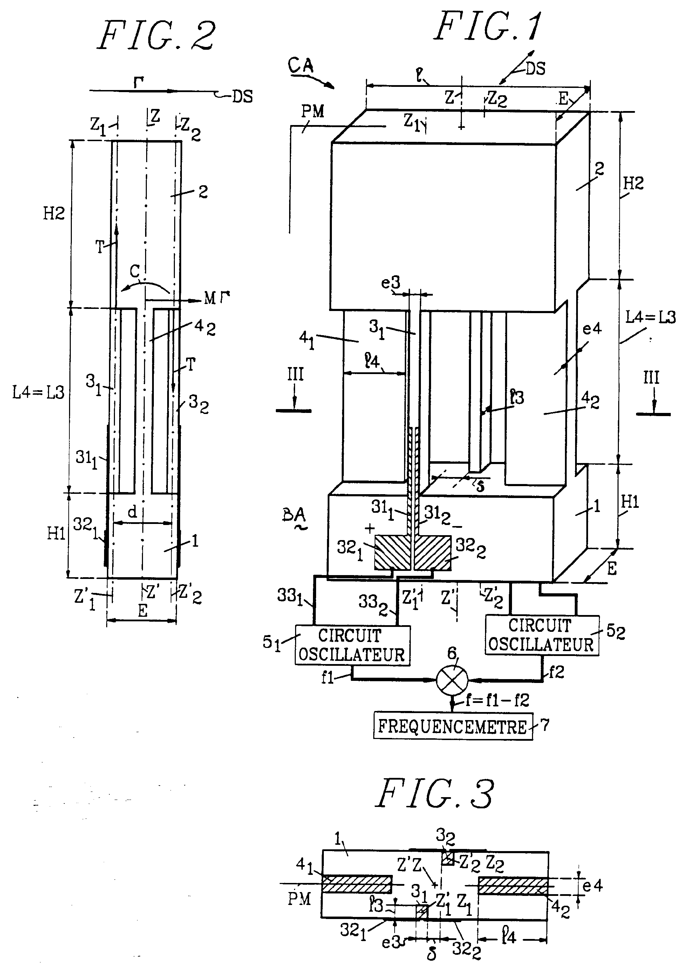

Comme montré à la Fig. 1, le corps d'un capteur CA selon l'invention est réalisé par usinage chimique d'une plaque de matériau piézoélectrique, tel que du quartz, ayant une épaisseur uniforme E. Le corps du capteur CA est donc monobloc.

Selon la réalisation illustrée aux Figs. 1 à 3, le corps du capteur CA a la forme générale d'un parallélépipède qui s'étend ici verticalement suivant le sens de la longueur matérialisé par une axe longitudinal central $Z'Z$. Cet axe $Z'Z$ est contenu dans un plan médian PM de la plaque parallèle aux faces de celles-ci.

Selon la réalisation illustrée, l'axe $Z'Z$ constitue un axe de symétrie du capteur.

Le capteur CA comprend une partie massive fixe 1 et une partie massive mobile 2 formées par des pavés parallélépipédiques disposés aux extrémités longitudinales du corps du capteur, et ayant donc des épaisseur et largeur égales à celles E et $\ell$ du corps. Les hauteurs H1 et H2 des parties 1 et 2 sont généralement différentes, et de préférence H1<H2. La partie fixe 1 est destinée à être solidaire de la structure d'un engin (missile ou satellite) par l'intermédiaire d'une embase de boîtier BA. Le bloc fixe 1 est fixé à l'embase BA par example par collage. La partie 2 constitue la masse d'épreuve du capteur. L'accélération du déplacement de l'engin, ou la position de l'engin dans le champ de gravité terrestre est mesurée au moyen du capteur CA selon qui celui-ci est utilisé en accéléromètre ou en inclinomètre.

Le corps de capteur CA comprend également deux premières poutres vibrantes identiques $3_1$ et $3_2$, et deux secondes poutres identiques $4_1$ et $4_2$ de section plus grande que les premières, pour relier les deux parties 1 et 2. Les poutres $3_1, 3_2$ et $4_1, 4_2$ sont disposées sensiblement en croix et s'étendent parallèlement à l'axe $Z'Z$.

Les premières poutres $3_1$ et $3_2$ ont une petite section rectangulaire transversale horizontale définie par une épaisseur e3 et une largeur $\ell$3 prises suivant la largeur $\ell$ et l'épaisseur E du corps de capteur respectivement. La largeur $\ell$3 des premières poutres est inférieure à E/2, et les chants longitudinaux des poutres

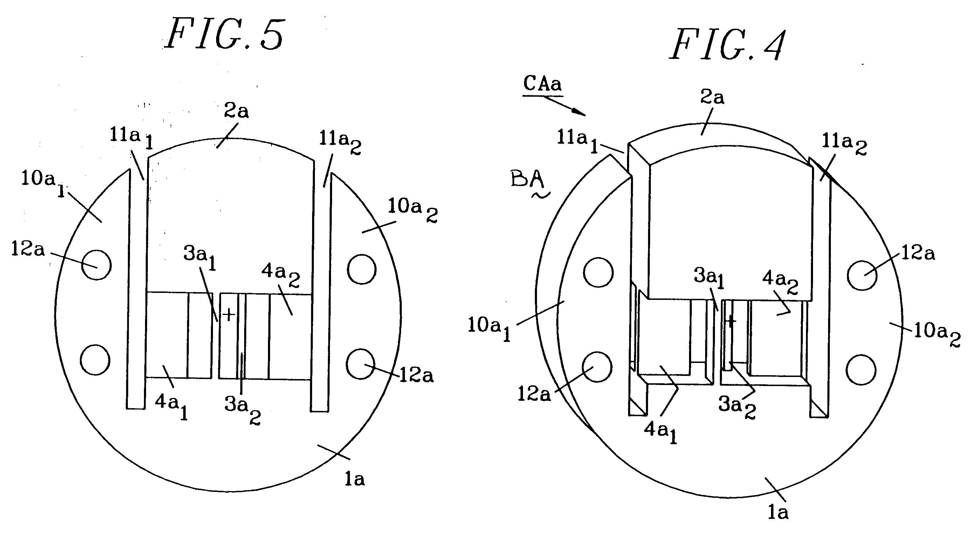

$3_1$ et $3_2$ tournés vers l'extérieur du corps sont coplanaires aux grandes faces des pavés 1 et 2 du capteur et donc aux faces de la plaque de matériau. En outre, lorsque le corps est obtenu par usinage chimique, les poutres $3_1$ et $3_2$ sont décalées l'une par rapport à l'autre d'une distance faible δ, c'est-à-dire les axes $Z'_1Z_1$ et $Z'_2Z_2$ des premières poutres sont dans un plan oblique au plan médian PM. Les sections transversales des poutres $3_1$ et $3_2$ en coupe transversale montrée à la Fig. 3 sont distantes de δ/2 par rapport à un plan perpendiculaire au plan PM et passant par l'axe $Z'Z$.

Les poutres $3_1$ et $3_2$ constituent des lames vibrant en flexion par exemple suivant une direction parallèle au plan médian PM.

Les vibrations des lames $3_1$ et $3_2$ sont entretenues à leurs résonances propres, au moyen de deux circuits électroniques oscillateurs $5_1$ et $5_2$ classiques, comme montré à la Fig. 1. L'excitation électrique de chaque lame, par exemple la lame $3_1$, est obtenue par deux électrodes $31_1$ et $31_2$ imprimées sous la forme de deux rubans étroits parallèles qui sont, symétriques par rapport au plan médian longitudinal de la lame, et situés à l'extrémité du chant longitudinal externe de la lame qui est contigüe à la partie fixe 1. Sur la face correspondante de la partie fixe 1, les électrodes $31_1$, $31_2$ de la lame $3_1$ sont terminées par deux plaques $32_1$ et $32_2$, ici carrées, sur lesquelles sont soudés deux fils conducteurs respectifs $33_1$ et $33_2$ connectés à des bornes adéquates du circuit oscillateur $5_1$.

Les lames $3_1$ et $3_2$ vibrent ainsi en flexion parallèlement au plan PM. Toutefois, selon d'autres dispositions des électrodes, ces dernières peuvent vibrer transversalement au plan PM.

Des sorties des circuits $5_1$ et $5_2$ transmettent deux signaux de fréquences respectives $f_1$ et $f_2$ aux entrées d'un circuit de soustraction de fréquence classique 6 qui délivre un signal ayant la fréquence différentielle $f = f_1 - f_2$ mesurée par un fréquencemètre 7.

Les secondes poutres $4_1$ et $4_2$ s'étendent également parallèlement à l'axe $Z'Z$ mais ont des plans médians parallèles au plan PM, et selon les Figs. 1 à 3, confondus avec le plan PM. La largeur $\ell$4 des secondes poutres est inférieure à $(\ell-(2.e3+\delta))/2$. L'épaisseur e4 des secondes poutres est de préférence nettement inférieure à E. Dans les Figs. 1, 2, 4 et 5, la longueur L3 des premières poutres $3_1$ et $3_2$ est égale à la longueur L4 des secondes poutres $4_1$ et $4_2$, ces longueurs étant ici prises verticalement suivant les hauteurs de pavé H1 et H2.

En effet, selon d'autres variantes, l'une ou les deux parties 1 et 2 ont un contour de face en T pour L3<L4, ou ont un contour de face en U pour L3>L4. Les secondes poutres $4_1$ et $4_2$ constituent des articulations flexibles suivant leur épaisseur lorsque le capteur CA est soumis à une accélération suivant la direction transversale sensible DS.

Le capteur selon l'invention constitue ainsi un capteur mono-axe, suivant la direction sensible DS perpendiculaire au plan PM.

Le fonctionnement du capteur est le suivant en référence à la Fig. 2 qui montre les efforts principaux exercés par la masse mobile 2 sur les lames vibrantes $3_1$ et $3_2$ et les articulations $4_1$ et $4_2$, lorsque le capteur CA est soumis à une accélération $\Gamma$ appliquée suivant la direction sensible DS.

L'une, $3_1$ des lames est soumise à une force d'extension et l'autre lame, $3_2$, à une force de compression. Ces deux forces sont de même intensité T si les deux lames $3_1$ et $3_2$ sont identiques. Pour simplifier la présentation des calculs, les deux lames sont supposées identiques, sachant que le bon fonctionnement d'un capteur selon l'invention s'accommode bien de deux lames différentes, c'est-à-dire d'épaisseurs et/ou de largeurs différentes des lames.

Les articulations $4_1$ et $4_2$, subissent d'une part, un moment fléchissant C, et d'autre part, un effort tranchant quasiment égal à $M\Gamma$, M étant la masse de la partie mobile. La raideur en flexion des lames $3_1$ et $3_2$ étant nettement inférieure à celle des articulations $4_1$ et $4_2$ les efforts tranchants et moments fléchissants subis par les lames peuvent être négligés.

L'expression des forces T s'obtient en résolvant un système d'équations qui traduit l'équilibre de la masse mobile, ainsi que le comportement mécanique des lames et des articulations. On obtient une intensité de force proportionnelle à l'accélération $\Gamma$ :

$$T = \chi \, M\Gamma,$$

où $\chi$ désigne le coefficient multiplicatif de $M\Gamma$ tel que

$$\chi = [(H2 + L)/2d)(1/(1 + 2 \, I_a/(sd^2)))]$$

où

$$L = L3 = L4 \text{ et } d = E - \ell 3,$$

- $I_a$ est la somme des moments d'inertie de section des deux articulations $4_1$ et $4_2$, et
- $s = \ell 3.e3$ est la section d'une lame vibrante $3_1$, $3_2$.

Les lames sont donc soumises à des forces T ayant une intensité égale à $\chi$ fois $M\Gamma$. Le coefficient multiplicatif $\chi$ peut facilement atteindre plusieurs unités, même avec des articulations beaucoup plus raides que les lames vibrantes.

Les forces d'extension et de compression que subissent les lames $3_1$ et $3_2$ sont la cause de variations de fréquence opposées pour les deux lames

$$\Delta f_1 = + k \, T$$
$$\Delta f_2 = - k \, T,$$

où k est un coefficient dépendant de la section des lames vibrantes et de caractéristiques du matériau piézoélectrique. Les fréquences de résonance des deux lames $3_1$ et $3_2$ s'écrivent en fonction de l'accélération $\Gamma$ :

$$f_1 = f_o + k \, \chi M\Gamma$$
$$f_2 = f_o - k \, \chi M\Gamma,$$

où $f_o$ est la fréquence de résonance des lames en l'absence d'accélération. La fréquence f a alors pour expression :

$$f = f_1 - f_2 = 2 \, k \, \chi M\Gamma$$

Les variations de la fréquence f sont donc représentatives des variations de l'accélération $\Gamma$ appliquée au capteur suivant la direction sensible DS. L'intérêt d'opérer des mesures en dépendance de la différence des fréquences $f_1$ et $f_2$ est que d'une part, l'influence des grandeurs d'entrée parasites, telles que principalement la température, est notablement réduite, et d'autre part, la sensibilité du capteur à l'accélération est la somme des sensibilité des deux lames.

Il est à noter que la géométrie du capteur CA illustré aux Figs. 1 à 3 est une géométrie préférentielle dont les avantages sont ci-après rapportées par rapport à d'autres variantes de capteur selon l'invention .

Le plan médian de chacune des poutres d'articulation $4_1$ et $4_2$ coïncide de préférence avec le plan médian PM de la plaque, afin d'annuler les effets d'une accélération parallèle à l'axe ZZ'. En effet, dans ce cas d'accélération transverse à la direction sensible DS, les lames vibrantes $3_1$ et $3_2$ subissent des mêmes contraintes résiduelles d'extension ou de compression, et les variations de fréquence $\Delta f_1$ et $\Delta f_2$ sont égales en module et en signe, pour les deux lames. La fréquence différentielle f ne présente donc pas de variation pour une accélération transverse.

Il est souhaitable que la raideur en flexion des articulations $4_1$ et $4_2$ soit nettement supérieure à la raideur en flexion des lames $3_1$ et $3_2$. La masse mobile 2 est ainsi bien tenue et le capteur respecte, malgré une masse mobile importante, la spécification habituelle concernant la fréquence propre de capteurs accélérométriques : aucune fréquence de résonance de structure inférieure à 2000 Hz.

Une raideur grande des articulations $4_1$ et $4_2$ est particulièrement intéressante, car cela permet de choisir une masse mobile 2 suffisamment importante pour exploiter au maximum la sensibilité des lames vibrantes. Typiquement, la masse de la partie précitée mobile 2 est environ 1000 fois celle d'une poutre simple $3_1, 3_2$. Ainsi, il est possible de réaliser un capteur dont la fréquence propre vaut 5000 Hz, et pour lequel chacune des lames vibrantes $3_1, 3_2$ présente une variation relative de fréquence de 5 % pour une accélération appliquée de 100 G.

Selon la réalisation illustrée aux Figs. 1 et 2, le plan contenant les axes médians $Z'_1 Z_1$ et $Z'_2 Z_2$ des lames $3_1$ et $3_2$ n'est pas perpendiculaire au plan PM. Le décalage $\delta$ entre les deux lames autorise la réalisation du corps du capteur par usinage chimique, et n'est pas préjudiciable au bon fonctionnement du capteur, grâce à la présence des articulations $4_1$ et $4_2$.

Une autre réalisation d'un capteur CAa selon l'invention est montrée aux Figs. 4 et 5. Le capteur CAa comprend un corps monobloc, en quartz, qui est obtenu par usinage chimique à l'aide de procédés photolithographiques, à partir d'une plaque de quartz dont le plan médian est orthogonal à l'axe cristallographique Z.

Le capteur CAa est discoïde et comporte une partie fixe 1a, une partie mobile 2a, des lames $3a_1$ et $3a_2$, et des articulations $4a_1$ et $4a_2$ similaires à celles du capteur CA.

Par rapport au capteur CA, la partie fixe 1a comporte deux branches $10a_1$ et $10a_2$ sous la forme de segments discoïdes longeant les chants longitudinaux de la partie mobile 2a et des articulations $4a_1$ et $4a_2$ et s'étendant jusqu'à l'extrémité de la masse mobile 2a.

Des fentes étroites $11a_1$ et $11a_2$ séparent ainsi les branches de partie fixe $10a_1$ et $10a_2$ et les chants longitudinaux de la partie mobile 2a. Les branches sont percées de quatre trous 12a prévus pour le passage de traversées électriques étanches d'une embase de boîtier du capteur. La fixation de la partie fixe 1a sur l'embase est effectuée au voisinage des trous 12a, c'est-à-dire suffisamment loin des lames vibrantes $3a_1$ et $3a_2$ pour ne pas altérer la qualité de leurs vibrations.

Le contour circulaire du corps du capteur CAa procure la compacité nécessaire à son intégration dans un boîtier cylindrique de faible encombrement.

## Revendications

1. Capteur accélérométrique comprenant une partie massive fixe (1), une partie massive mobile (2), et deux poutres vibrant en flexion $(3_1, 3_2)$ ayant chacune des extrémités solidaires des parties massives respectivement, caractérisé en ce qu'il comprend deux secondes poutres $(4_1, 4_2)$ ayant chacune des extrémités solidaires des parties massives (1,2) et disposées de part et d'autre des poutres vibrantes $(3_1, 3_2)$.

2. Capteur accélérométrique conforme à la revendication 1, caractérisé par une raideur en flexion des secondes poutres $(4_1, 4_2)$ plus élevée que celle des poutres vibrantes $(3_1, 3_2)$.

3. Capteur accélérométrique conforme à la revendication 1 ou 2, caractérisé par une section transversale $(\ell4.e4)$ des secondes poutres $(4_1, 4_2)$ plus grande que celle $(\ell3.e3)$ des poutres vibrantes $(3_1, 3_2)$.

4. Capteur accélérométrique conforme à l'une quelconque des revendications 1 à 3, caractérisé en ce que les poutres vibrantes $(3_1, 3_2)$ ont des grands côtés longitudinaux parallèles entre eux et perpendiculaires à des grands côtés longitudinaux des secondes poutres $(4_1, 4_2)$.

5. Capteur accélérométrique conforme à l'une quelconque des revendications 1 à 4, caractérisé par des secondes poutres $(4_1, 4_2)$ identiques.

6. Capteur accélérométrique conforme à l'une quelconque des revendications 1 à 5, caractérisé en ce que les parties massives (1,2) et les poutres vibrantes $(3_1, 3_2)$ et les secondes poutres $(4_1, 4_2)$ constituent un corps monobloc (CA) usiné dans une même plaque de matériau d'épaisseur uniforme.

7. Capteur accélérométrique conforme à la revendication 6, caractérisé en ce que le matériau de ladite plaque est piézoélectrique.

8. Capteur accélérométrique conforme à la revendicateur 6 ou 7, caractérisé en ce que le corps monobloc est obtenu par usinage chimique de ladite plaque.

9. Capteur accélérométrique conforme à l'une quelconque des revendications 1 à 8, caractérisé en ce que les parties massives (1,2) ont dans leur épaisseur (E) un plan médian commun (PM) de part et d'autre duquel s'étendent lesdites poutres vibrantes $(3_1, 3_2)$.

10. Capteur accélérométrique conforme à la revendication 9, caractérisé en ce que les poutres vibrantes $(3_1, 3_2)$ ont des largeurs (23) comprises dans les deux demi-épaisseurs (E/2) des parties massives (1,2) respectivement.

11. Capteur accélérométrique conforme à la revendication 9 ou 10, caractérisé en ce que les poutres vibrantes $(3_1, 3_2)$ ont des axes longitudinaux parallèles $(Z'_1 Z_1, Z'_2 Z_2)$ situés dans un plan oblique au plan médian (PM) des parties massives (1,2).

12. Capteur accélérométrique conforme à l'une quelconque des revendications 9 à 11, caractérisé en ce que les secondes poutres $(4_1, 4_2)$ ont un même plan longitudinal médian confondu avec ledit plan médian (PM) des parties massives (1,2).

13. Capteur accélérométrique conforme à la revendication 12, caractérisé en ce que les secondes poutres $(4_1, 4_2)$ ont des largeurs $(\ell4)$ comprises dans les demi-largeurs $(\ell/2)$ des parties massives (1,2) respectivement.

14. Capteur accélérométrique conforme à l'une quelconque des revendications 1 à 13, caractérisé par des poutres vibrantes $(3_1, 3_2)$ identiques.

15. Capteur accélérométrique conforme à l'une quelconque des revendications 1 à 14, caractérisé en ce que les poutres vibrantes $(3_1, 3_2)$ et la partie fixe (1) ont des côtés coplanaires deux à deux et supportant des paires d'électrodes (31,32).

16. Capteur accélérométrique conforme à l'une quelconque des revendications 1 à 14, caractérisé en ce que la partie fixe (1a) comprend des branches ($10a_1, 10a_2$) longeant des chants longitudinaux des secondes poutres ($4a_1, 4a_2$) et de la partie mobile (2a) et des moyens (12a) pour fixer les branches de la partie fixe sur une embase (BA).

## Claims

1. Accelerometric sensor comprising a fixed mass part (1), a mobile mass part (2), and two flectional vibrating beams ($3_1, 3_2$) each having ends integral with the mass parts respectively, characterized in that it comprises two second beams ($4_1, 4_2$) each having ends integral with the mass parts (1,2) and placed on both sides of vibrating beams ($3_1, 3_2$).

2. Accelerometric sensor according to claim 1, characterized by a flexural stiffness of the second beams ($4_1, 4_2$) higher than that of the vibrating beams ($3_1, 3_2$).

3. Accelerometric sensor according to claim 1 or 2, characterized by a transverse cross-section ($\ell 4.e4$) of the second beams ($4_1, 4_2$) greater than that ($\ell 3, e3$) of vibrating beams ($3_1, 3_2$).

4. Accelerometric sensor according to any one of claims 1 to 3, characterized in that the vibrating beams ($3_1, 3_2$) have major longitudinal sides parallel to one another and perpendicular to major longitudinal sides of the second beams ($4_1, 4_2$).

5. Accelerometric sensor according to any one of claims 1 to 4, characterized by second identical beams ($4_1, 4_2$).

6. Accelerometric sensor according to any one of claims 1 to 5, characterized in that the mass parts (1,2) and the vibrating beams ($3_1, 3_2$) and the second beams ($4_1, 4_2$) constitute one single piece (CA) machined in a same plate of material with uniform thickness.

7. Accelerometric sensor according to claim 6, characterized in that the material of said plate is piezoelectric.

8. Accelerometric sensor according to claim 6 or 7, characterized in that the single-piece body is obtained by chemical machining of said plate.

9. Accelerometric sensor according to any one of claims 1 to 8, characterized in the mass parts (1,2) have in their thickness (E) a common mid-plane (PM) on both sides of which the said vibrating beams ($3_1, 3_2$) extend.

10. Accelerometric sensor according to claim 9, characterized in that the vibrating beams ($3_1, 3_2$) have widths (23) included within the two half-thicknesses (E/2) of the mass parts (1,2) respectively.

11. Accelerometric sensor according to claim 9 or 10, characterized in that the vibrating beams ($3_1, 3_2$) have parallel longitudinal axes ($Z'_1 Z_1, Z'_2 Z_2$) situated in a plane oblique to the mid-plane (PM) of the mass parts (1,2).

12. Accelerometric sensor according to any one of claims 9 to 11, characterized in that the second beams ($4_1, 4_2$) have a same longitudinal mid-plane coinciding with said mid-plane (PM) of the mass parts (1,2).

13. Accelerometric sensor according to claim 12, characterized in that the second beams ($4_1, 4_2$) have widths (14) included within the half-widths (1/2) of the mass parts (1,2) respectively.

14. Accelerometric sensor according to any one of claims 1 to 13, characterized by vibrating identical beams ($3_1, 3_2$).

15. Accelerometric sensor according to any one of claims 1 to 14, characterized in that the vibrating beams ($3_1, 3_2$) and the fixed part (1) have sides coplanar two-by-two and supporting pairs of electrodes (31,32).

16. Accelerometric sensor according to any one of claims 1 to 14, characterized in that the fixed part (1a) comprises branches ($10a_1, 10a_2$) extending along longitudinal edges of second beams ($4a_1, 4a_2$) and the mobile part (2a), and means (12a) for fixing the branches of the fixed part to a base (BA).

## Patentansprüche

1. Beschleunigungsmesser, umfassend einen festen Massivteil (1), einen beweglichen Massivteil (2) und zwei Biegeschwingerträger (31, 32), die jeweils fest mit den entsprechenden Massivteilen verbundene Enden aufweisen, dadurch **gekennzeichnet,** daß er zwei zweite Träger ($4_1, 4_2$) umfaßt, die jeweils fest mit den Massivteilen (1, 2) verbundene und auf beiden Seiten von den Vibrationsträgern ($3_1, 3_2$) angeordnete Enden aufweisen.

2. Beschleunigungsmesser nach Anspruch 1, **ge-**

**kennzeichnet** durch eine Biegesteifigkeit der zweiten Träger ($4_1$, $4_2$), die höher als diejenige der Vibrationsträger ($3_1$, $3_2$) ist.

3. Beschleunigungsmesser nach Anspruch oder 2, **gekennzeichnet** durch einen Querschnitt ($\ell 4.e4$) der zweiten Träger ($4_1$, $4_2$), der größer als derjenige ($\ell 3.e3$) der Vibrationsträger ($3_1$, $3_2$) ist.

4. Beschleunigungsmesser nach einem beliebigen der Ansprüche 1 bis 3, dadurch **gekennzeichnet,** daß die Vibrationsträger ($3_1$, $3_2$) zueinander parallele und zu den groben Längsseiten der zweiten Träger ($4_1$, $4_2$) senkrechte große Längsseiten aufweisen.

5. Beschleunigungsmesser nach einem beliebigen der Ansprüche 1 bis 4, **gekennzeichnet** durch identische zweite Träger ($4_1$, $4_2$).

6. Beschleunigungsmesser nach einem beliebigen der Ansprüche 1 bis 5, dadurch **gekennzeichnet,** daß die Massivteile (1, 2) und die Vibrationsträger ($3_1$, $3_2$) und die zweiten Träger ($4_1$, $4_2$) einen aus einer selben Materialplatte mit gleichmäßiger Dicke maschinell hergestellten Körper aus einem Stück (CA) bilden.

7. Beschleunigungsmesser nach Anspruch 6, dadurch **gekennzeichnet,** daß das Material des Platte piezoelektrisch ist.

8. Beschleunigungsmesser nach Anspruch 6 oder 7, dadurch **gekennzeichnet,** daß der Körper aus einem Stück durch chemische maschinelle Bearbeitung der Platte erhalten worden ist.

9. Beschleunigungsmesser nach einem beliebigen der Ansprüche 1 bis 8, dadurch **gekennzeichnet,** daß die Massivteile (1, 2) in ihrer Dicke (E) eine gemeinsame Mittelebene (PM) aufweisen, auf deren beiden Seiten sich die Vibrationsträger ($3_1$, $3_2$) erstrecken.

10. Beschleunigungsmesser nach Anspruch 9, dadurch **gekennzeichnet,** daß die Vibrationsträger ($3_1$, $3_2$) Breiten (23) aufweisen, die jeweils in den beiden Halbdicken (E/2) der Massivteile (1, 2) enthalten sind.

11. Beschleunigungsmesser nach Anspruch 9 oder 10, dadurch **gekennzeichnet,** daß die Vibrationsträger ($3_1$, $3_2$) in einer zur Mittelebene (PM) der Massivteile (1, 2) geneigten Ebene liegende parallele Längsachsen ($Z'_1Z_1$, $Z'_2Z_2$) aufweisen.

12. Beschleunigungsmesser nach einem beliebigen der Ansprüche 9 bis 11, dadurch **gekennzeich-**

**net,** daß die zweiten Träger ($4_1$, $4_2$) eine mit der Mittelebene (PM) der Massivteile (1, 2) verschmolzene nämliche Längsmittelebene aufweisen.

13. Beschleunigungsmesser nach Anspruch 12, dadurch **gekennzeichnet,** daß die zweiten Träger ($4_1$, $4_2$) Breiten ($\ell 4$) aufweisen, die in den Halbbreiten ($\ell/2$) der Massivteile (1, 2) jeweils enthalten sind.

14. Beschleunigungsmesser nach einem beliebigen der Ansprüche 1 bis 3, **gekennzeichnet** durch identische Vibrationsträger ($3_1$, $3_2$).

15. Beschleunigungsmesser nach einem beliebigen der Ansprüche 1 bis 4, dadurch **gekennzeichnet,** daß die Vibrationsträger ($3_1$, $3_2$) und der feste Teil (1) paarweise koplanare und Elektrodenpaare ($3_1$, $3_2$) tragende Seiten aufweisen.

16. Beschleunigungsmesser nach einem beliebigen der Ansprüche 1 bis 14, dadurch **gekennzeichnet,** daß der feste Teil (1a) beschnitte ($10a_1$, $10a_2$), die entlang der Längskanten der zweiten Träger ($4a_1$, $4a_2$) und des beweglichen Teils (2a) verlaufen, und Mittel (12a) umfaßt, um die beschnitte des festen Teils auf einem Basiselement (BA) zu befestigen.

# FIG.2

# FIG.1

# FIG.3

CIRCUIT OSCILLATEUR

CIRCUIT OSCILLATEUR

FREQUENCEMETRE

## FIG.5

## FIG.4

EP 0 414 588 B1